Europäisches Patentamt

(19) European Patent Office

Office européen des brevets

(11) Publication number: **0 229 487**
**B1**

## (12) EUROPEAN PATENT SPECIFICATION

(45) Date of publication of the patent specification:
31.10.90

(21) Application number: 86309436.3

(22) Date of filing: 04.12.86

(51) Int. Cl.⁵: **C08L 67/02**, C08L 27/06
// (C08L67/02,
27:06),(C08L27/06, 67:02)

(54) Polymer composition of a polyester copolymer & polyvinyl chloride.

(30) Priority: 04.12.85 US 804559

(43) Date of publication of application:
22.07.87 Bulletin 87/30

(45) Publication of the grant of the patent:
31.10.90 Bulletin 90/44

(84) Designated Contracting States:
BE DE ES FR GB IT NL

(56) References cited:
EP-A- 0 088 263
DE-A- 2 263 006
US-A- 2 555 062

CHEMICAL ABSTRACTS, vol. 101, no. 4, 23rd July 1984,
page 80, abstract no. 25090w, Columbus, Ohio, US; &
JP-A-58 215 475

(73) Proprietor: ARCO CHEMICAL TECHNOLOGY INC., 3
Christina Centre Suite 902 201 N Walnut Street,
Wilmington Delaware 19801(US)

(72) Inventor: Le-Khac, Bi, 1538 Marlboro Road, West
Chester Pennsylvania 19382(US)

(74) Representative: Cropp, John Anthony David et al,
MATHYS & SQUIRE 10 Fleet Street, London,
EC4Y 1AY(GB)

**Description**

This invention relates to polymer compositions.

In one of its more specific aspects, this invention relates to a thermodynamically miscible polymer composition of thermoplastic polyester copolymer and polyvinyl chloride (PVC).

The polymer compositions of this invention have been found to exhibit thermodynamic miscibility; that is, they exhibit a single continuous phase and a single glass transition temperature value.

The miscibility of polymers is generally determined using differential scanning calorimetry to measure glass transition temperature. A thermodynamically miscible polymer composition will exhibit a single well-defined glass transition temperature value which typically lies intermediate between the glass transition temperatures of the individual polymeric components. Accordingly as used herein, the phrase "thermodynamically miscible" is used to define two or more polymers which when combined with one another result in a composition which exibits a single continuous phase and a single, well-defined glass transition temperature value.

According to this invention, there is provided a polymer composition comprising (A) a polyester copolymer comprising the reaction product of at least one $C_2$ to $C_6$ linear alkylene diol monomer, at least one aromatic diacid derivative and 2-methyl-1,3-propanediol and wherein the ratio of 2-methyl-1,3-propanediol residues to residues of said at least one $C_2$ to $C_6$ linear alkylene diol is within the range of from 80 to 20 to 20 to 80 in said polyester copolymer, and (B) polyvinyl chloride, wherein (A) and (B) are thermodynamically miscible with one another such that the polymer composition exhibits a single glass transition temperature value.

Also according to this invention, there is provided a method of producing a molded polymer composition which comprises forming a polymer composition as defined above and molding the resulting composition.

According to this invention, there is also provided a molded composition comprising a single continuous phase, the single continuous phase being a polymer composition as defined above.

The polymer composition of this invention exhibits thermodynamic miscibility at all blended ratios of polyester copolymer (A) to PVC (B). Typically, the polymer composition will comprise from about 1 to about 99 weight percent of copolymer (A) and 99 to about 1 weight percent of PVC (B).

Suitable $C_2$ to $C_6$ linear alkylene diols for use in the preparation of copolymer (A) are 1,4-butanediol, 1,3-propanediol, ethylene glycol, 1,5-pentanediol and 1,6-hexanediol and their mixtures. The preferred linear alkylene diol is 1,4-butanediol.

Suitable aromatic diacid derivatives for use in the preparation of copolymer (A) are dimethyl terephthalate, dimethyl isophthalate, dimethyl ester of 1,8-napthalene dicarboxylic acid, dimethyl ester of 2,7-naphthalate dicarboxlic acid, and their mixtures. The preferred aromatic diacid derivative is dimethyl terephthalate.

The 2-methyl-1,3-propanediol is commercially available. Moreover, methods for its preparation are well known; see, for example, U.S. Pat. 4,096,192.

Polyester copolymer (A) can be prepared using any suitable method of polymerization. The preferred method is polycondensation polymerization using about 50 mole % of the aromatic diacid derivative and about a combined total of about 50 mole % of 2-methyl-1,3-propanediol and $C_2$ to $C_6$ linear alkylene diol or diols. As is typical in the preparation of polyesters, the diol is employed in a slight excess above 50 mole %. The mole ratio of 2-methyl-1,3-propanediol to $C_2$ to $C_6$ linear alkylene diol will be from about 20 to 80 mole % 2-methyl-1,3-propanediol to about 80 to 20 mole % $C_2$ to $C_6$ linear alkylene diol in the final polyester copolymer. The preferred mole ratio of 2-methyl-1,3-propanediol to linear alkylene diol in the final copolymer will be within the range of from about 70 to 30 to about 30 to 70.

The polymer compositions of this invention can be prepared using any suitable blending method such as, for example, melt mixing as demonstrated in the following examples. All glass transition temperature values were determined by differential scanning calorimetry (DSC).

Example 1

This example demonstrates the preparation of a thermoplastic polyester copolymer (A) suitable for use in the invention.

About 2.56 moles of 1,4-butanediol, about 2.56 moles of 2-methyl-1,3-propanediol, and about 1.586 moles of dimethyl terephthalate were changed into a one-liter zipperclave reactor equipped with a double helical ribbon-type stirring blade. After the reactor was sealed and purged three times with nitrogen, about 1.01 grams of tetrabutoxy titanium catalyst were added through the vacuum port of the reactor. The reactor contents were heated for about four hours - about one hour at 180°C and then at 230°C for about three hours. The heating was carried out under a nitrogen stream and at atmospheric pressure. Methanol which formed was distilled off. After the methanol was distilled off, the reactor contents were heated to and held at 250°C for about two hours while the system was evacuated to 0.2mm Hg using dual vacuum pumps.

The resulting product was recovered and identified as a polyester copolymer of the monomers charged. The copolymer was found to have a glass transition temperature value of 44.8°C and was transparent. The copolymer has no detectable melting point. The mole ratio of 2-methyl-1,3-propanediol to 1,4-butanediol in the copolymer was found to be 56:44.

Examples 2 and 3

Following substantially the procedure of Example 1, two additional polyester copolymers were prepared using different starting mole ratios of 2-methyl-1,3-propanediol to 1,4-butanediol. The starting and final polymer mole ratios and the properties of the copolymers of Examples 1-3 are set forth in following Table 1.

## TABLE 1

| Example | Mole % Ratio MPD:BD Charged to Reactor | Mole % Ratio MPD:BD in final Copolymer | Appearance | Glass Transition Temperature ($^{o}$C) |
|---|---|---|---|---|
| Control | 100:0 | --- | transparent | 49.3 |
| No. 1 | 50:50 | 56:44 | transparent | 44.8 |
| No. 2 | 37.5:62.5 | 36:64 | transparent | 36.5 |
| No. 3 | 25:75 | 23:77 | transparent/ opaque | 32.5 |
| Control | 0:100 | --- | opaque | 52.0 |

MPD = 2-methyl-1,3-propanediol
BD = 1,4-butanediol

EP 0 229 487 B1

Example 4

The example demonstrates the preparation of a polymer composition of this invention.

About 50 parts by weight of the polyester copolymer produced in Example 1 and about 50 parts by weight of polyvinyl chloride (Borden Chemical PVC, 0.80 inherent viscosity, Tg = 85°C) were melt blended in a Brabender mixer for about five minutes at 160°C and 60 rpm. The resultant polymer composition was found to possess a single glass transition temperature valve of 68.7°C.

Examples 5, 6 and 7

Following the procedure of Example 4, three more polymer compositions of the invention were separately prepared using the copolymer prepared in Example 1 and the same Borden Chemical PVC. The compositions (Examples 5, 6 and 7) and their glass transition temperatures are shown in Table II.

## TABLE II

| Example | PVC/Polyester (parts per 100 parts by-weight) | Glass Transition Temperature (°C) |
|---|---|---|
| Control | 100/0 | 85.0 |
| No. 5 | 90/10 | 80.0 |
| No. 6 | 80/20 | 75.0 |
| No. 7 | 70/30 | 73.0 |
| No. 4 | 50/50 | 68.7 |
| Control | 0/100 | 44.8 |

Examples 8, 9 and 10

Using the procedure of Example 4, the copolymer of Example 1, and GEON® 7082 polyvinyl chloride, (B.F. Goodrich Company) three more polymer compositions of this invention were prepared. The compositions (Examples 8, 9 and 10) and their glass transition temperatures are shown in following Table III.

## TABLE III

| Example | PVC/Polyester (Parts per 100 parts by weight.) | Glass Transition Temperature (°C) |
|---|---|---|
| Control | 100/0 | 79.0 |
| No. 8 | 90/10 | 75.0 |
| No. 9 | 80/20 | 71.5 |
| No. 10 | 70/30 | 69.0 |
| Control | 0/100 | 44.8 |

The data of Tables II and III show that the polymer compositions of this invention which incorporate a polyester copolymer and PVC are thermodynamically miscible as evidenced by their single glass transition temperature values.

It will be evident from the foregoing that various modifications can be made to this invention. Such, however, are considered as being within the scope of the invention.

**Claims**

1. A polymer composition comprising: (A) a polyester copolymer comprising the reaction product of at least one $C_2$ to $C_6$ linear alkylene diol, at least one aromatic diacid derivative and 2-methyl-1,3-propanediol and wherein the ratio of 2-methyl-1,3-propanediol residues to residues of said at least one $C_2$ to $C_6$ linear alkylene diol is within the range of from 80 to 20 to 20 to 80 in said polyester copolymer, and (B) polyvinyl chloride, and wherein (A) and (B) are thermodynamically miscible with one another and the polymer composition exhibits a single glass transition temperature value.

2. A polymer composition as claimed in claim 1 in which (A) is produced by polycondensation polymerisation.

3. A polymer composition as claimed in claim 1 or claim 2 in which (A) is produced from about 50 mole % of said at least one aromatic diacid derivative and a combined total of about 50 mole % of said 2-methyl-1,3-propanediol and said at least one $C_2$ to $C_6$ linear alkylene diol.

4. A polymer composition as claimed in any one of claims 1 to 3 in which the ratio of 2-methyl-1,3-propanediol residues to residues of said at least one $C_2$ to $C_6$ linear alkylene diol is within the range of from about 70 to 30 to about 30 to 70 in the final copolymer.

5. A polymer composition as claimed in any one of claims 1 to 4 in which said $C_2$ to $C_6$ linear alkylene diol is selected from 1,4-butanediol, 1,3-propanediol, ethylene glycol, 1,5-pentanediol, 1,6-hexanediol and mixtures of two or more thereof.

6. A polymer composition as claimed in any one of claims 1 to 5 in which said aromatic diacid derivative is selected from dimethyl terephthalate, dimethyl isophthalate, the dimethyl ester of 1,8-naphthalene dicarboxylic acid, the dimethyl ester of 2,7-naphthalene dicarboxylic acid and mixtures of two or more thereof.

7. A polymer composition as claimed in any one of claims 1 to 6 comprising in weight percent from about 1 to about 99 of (A) and from about 99 to about 1 of (B).

8. A polymer composition as claimed in any one of claims 1 to 7 which has been prepared by melt mixing (A) and (B).

9. A method of producing a molded polymer composition which comprises forming a polymer composition as claimed in any one of claims 1 to 8, and molding the resulting composition.

10. A molded composition comprising a single continuous phase, the single continuous phase being a polymer composition as claimed in any one of claims 1 to 8.

**Patentansprüche**

1. Polymer-Zusammensetzung, umfassend
(A) ein Polyester-Copolymer, das das Reaktionsprodukt von wenigstens einem linearen $C_2$- bis $C_6$-Alkylendiol, wenigstens einem aromatischen Disäure-Derivat und 2-Methyl-1,3-propandiol umfaßt und worin das Verhältnis von 2-Methyl-1,3-propandiol-Resten zu Resten des wenigstens einen linearen $C_2$- bis $C_6$-Alkylendiols in dem Polyester-Copolymer im Bereich von 80 : 20 bis 20 : 80 liegt; und
(B) Polyvinylchlorid,
und worin (A) und (B) thermodynamisch miteinander mischbar sind und die Polymerzusammensetzung einen einzigen Wert der Glasübergangstemperatur zeigt.

2. Polymer-Zusammensetzung nach Anspruch 1, in der (A) durch Polykondensationspolymerisation hergestellt wird.

3. Polymer-Zusammensetzung nach Anspruch 1 oder Anspruch 2, in der (A) aus etwa 50 Mol-% des wenigstens einen aromatischen Disäure-Derivats und einer kombinierten Gesamtmenge von etwa 50 Mol-% des 2-Methyl-1,3-propandiols und des wenigstens einen linearen $C_2$- bis $C_6$-Alkylendiols hergestellt wird.

4. Polymer-Zusammensetzung nach einem der Ansprüche 1 bis 3, in der das Verhältnis von 2-methyl-1,3-propandiol-Resten zu Resten des wenigstens einen linearen $C_2$- bis $C_6$-Alkyldiols im Bereich von etwa 70 : 30 bis etwa 30 : 70 im Endpolymer liegt.

5. Polymer-Zusammensetzung nach einem der Ansprüche 1 bis 4, in der das lineare $C_2$- bis $C_6$-Alkylendiol ausgewählt ist aus 1,4-Butandiol, 1,3-Propandiol, Ethylenglykol, 1,5-Pentandiol, 1,6-Hexandiol und Mischungen von zwei oder mehr der genannten Verbindungen.

6. Polymer-Zusammensetzung nach einem der Ansprüche 1 bis 5, in der das aromatische Disäure-Derivat ausgewählt ist aus Dimethylterephthalat, Dimethylisophthalat, dem Dimethylester der 1,8-Naphthalindicarbonsäure, dem Dimethylester der 2,7-Naphthalindicarbonsäure und Mischungen von zwei oder mehr der genannten Verbindungen.

7. Polymer-Zusammensetzung nach einem der Ansprüche 1 bis 6, umfassend (in Gew.-%) von etwa 1 bis etwa 99% (A) und von etwa 99 bis etwa 1% (B).

8. Polymer-Zusammensetzung nach einem der Ansprüche 1 bis 7, welche durch Schmelzmischen von (A) und (B) hergestellt wurde.

9. Verfahren zur Herstellung einer geformten Polymerzusammensetzung, welches das Herstellen einer Polymer-Zusammensetzung nach einem der Ansprüche 1 bis 8 und das Formen der resultierenden Zusammensetzung umfaßt.

10. Geformte Zusammensetzung, die eine einzige kontinuierliche Phase umfaßt, wobei die einzige kontinuierliche Phase eine Polymer-Zusammensetzung nach einem der Ansprüche 1 bis 8 ist.

**Revendications**

1. Composition de polymères, caractérisée en ce qu'elle comprend (A) un copolymère de polyester comprenant le produit réactionnel d'au moins un alkylène diol linéaire en $C_{2-6}$, d'au moins un dérivé de diacide aromatique et du 2-méthyl-1,3-propanediol, le rapport des résidus de 2-méthyl-1,3-propanediol aux résidus de cet alkylène diol linéaire en $C_{2-6}$ au moins présent étant dans la gamme de 80–20 à 20–80 dans ce copolymère de polyester, et (B) un chlorure de polyvinyle, que (A) et (B) sont miscibles thermodynamiquement l'un avec l'autre et que la composition de polymères présente une unique valeur de température de transition vitreuse.

2. Composition de polymères suivant la revendication 1, caractérisée en ce que (A) est produit par polymérisation par polycondensation.

3. Composition de polymères suivant les revendications 1 ou 2, caractérisée en ce que (A) est produit à partir d'environ 50% en moles de ce dérivé de diacide aromatique au moins présent et d'un total combiné d'environ 50% en moles de ce 2-méthyl-1,3-propanediol et de cet alkylène diol linéaire en $C_{2-6}$ au moins présent.

4. Composition de polymères suivant l'une quelconque des revendications 1 à 3, caractérisée en ce que le rapport des résidues du 2-méthyl-1,3-propanediol aux résidus de cet alkylène diol linéaire en $C_{2-6}$ au moins présent, est de l'ordre d'environ 70–30 à 30–70 dans le polymère final.

5. Composition de polymères suivant l'une quelconque des revendications 1 à 4, caractérisée en ce que cet alkylène diol linéaire en $C_{2-6}$ est choisi parmi le 1,4-butanediol, le 1,3-butanediol, l'éthylène glycol, le 1,5-pentanediol et le 1,6-hexanediol et des mélanges de deux ou plusieurs de ceux-ci.

6. Composition de polymères suivant l'une quelconque des revendications 1 à 5, caractérisée en ce que ce dérivé de diacide aromatique est choisi parmi le téréphthalate de diméthyle, l'isophtalate de diméthyle, l'ester diméthylique de l'acide 1,8-naphtalène dicarboxylique, l'ester diméthylique de l'acide 2,7-naphtalène dicarboxylique et des mélanges de deux ou plusieurs de ceux-ci.

7. Composition de polymères suivant l'une quelconque des revendications 1 à 6, caractérisée en ce qu'elle comprend d'environ 1 à 99% en poids de (A) et d'environ 99 à 1% en poids de (B).

8. Composition de polymères suivant l'une quelconque des revendications 1 à 7, caractérisée en ce qu'elle a été préparée par mélange à l'état fondu de (A) et de (B).

9. Procédé de production d'une composition de polymères moulée, caractérisé en ce qu'il comprend la formation d'une composition de polymères suivant l'une quelconque des revendications 1 à 8 et le moulage de la composition résultante.

10. Composition moulée contenant une phase continue unique, caractérisée en ce que la phase continue unique est une composition de polymères suivant l'une quelconque des revendications 1 à 8.